# EUROPÄISCHE PATENTSCHRIFT

(11) **EP 4 420 244 B1**
(45) Veröffentlichungstag und Bekanntmachung des Hinweises auf die Patenterteilung: **22.10.2025**
(21) Anmeldenummer: 22782714.4
(22) Anmeldetag: 15.09.2022
(51) Int. Cl.: H04B 5/22, H04B 5/26, H04B 5/75, H04B 5/79, H04B 5/00

(54) **ELEKTRISCHES GERÄT MIT INDIREKTEM BLITZSCHUTZ, KURS-LAGE-REFERENZ-SYSTEM UND FLUGZEUG**
ELECTRICAL DEVICE WITH INDIRECT LIGHTNING PROTECTION, ATTITUDE AND HEADING REFERENCE SYSTEM, AND AIRCRAFT
DISPOSITIF ÉLECTRIQUE AVEC PROTECTION INDIRECTE CONTRE LA FOUDRE, SYSTÈME DE RÉFÉRENCE DE POSITION DE TRAJECTOIRE ET AÉRONEF

(30) Priorität: 20.10.2021 DE 102021127228
(43) Veröffentlichungstag der Anmeldung: 28.08.2024
(73) Patentinhaber: Northrop Grumman LITEF GmbH, 79115 Freiburg (DE)
(72) Erfinder: ZELLER, Peter, 79102 Freiburg (DE)
(74) Vertreter: Müller Hoffmann & Partner
(86) Internationale Anmeldenummer: PCT/EP2022/075711
(87) Internationale Veröffentlichungsnummer: WO 2023/066575

(56) Entgegenhaltungen:
- US-A1- 2016 352 097
- US-A1- 2018 041 249
- US-A1- 2019 199 137

## Beschreibung

Die vorliegende Erfindung betrifft ein elektrisches Gerät mit indirektem Blitzschutz, insbesondere für den Einsatz in einem Kurs-Lage-Referenz-System für Flugnavigation oder in einem Flugzeug.

Hohe Blitzschutzanforderungen sind gerade in der Luftfahrt von größter Bedeutung. Alle eingebauten Geräte sind mit einem Blitzschutz unterschiedlicher Größenordnung (Bedrohungspegel) zu versehen. Bei hohem Bedrohungspegel und einer großen Anzahl an verdrahteten Schnittstellenverbindungen zwischen den Geräten kann dies zu einem nicht zu unterschätzenden Platzbedarf in den einzelnen Geräten führen. Je nach Anforderungen und mechanischer Ausführung benötigt dieser Aufwand bis zu einem Drittel an Volumen in einem Gerät.

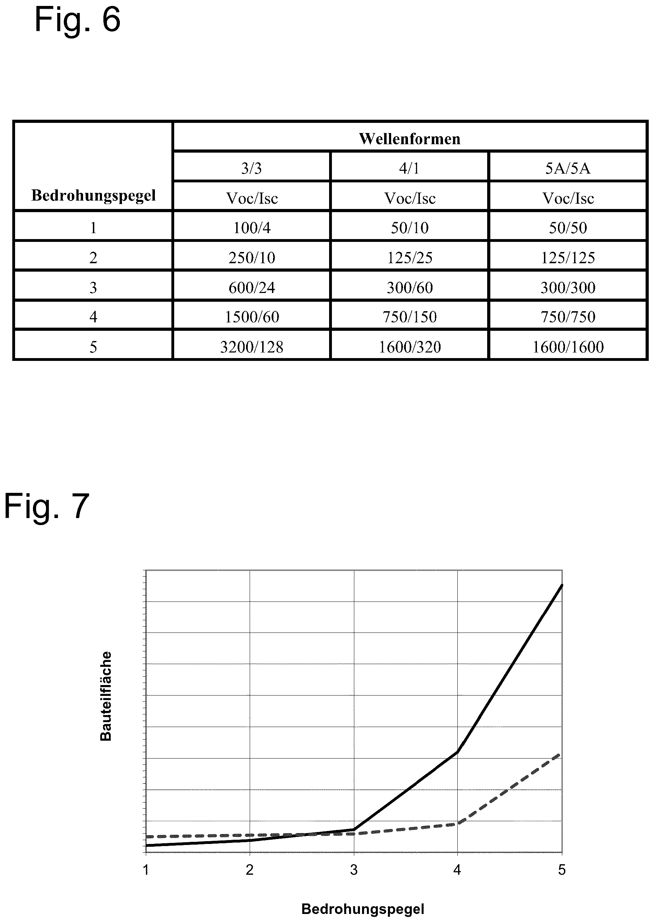

Gemäß der Blitzschutz-Norm DIN EN 62305-4 (VDE 0185-3054) wird eine Gefährdung von Bauteilen durch Blitzeinschlag in fünf Bedrohungspegel oder fünf Gefährdungspegel (LPL) klassifiziert. In Fig. 6 sind den Bedrohungspegeln 1 bis 5 entsprechende Kenndaten (das Verhältnis von Spitzenleerlaufspannung zu Spitzenkurzschlussstrom am Kalibrierungspunkt Voc (in V) /Isc (in A) bei unterschiedlichen Wellenformen 3, 4 und 5a) zugeordnet. Bei der Wellenform 3 handelt es sich um eine gedämpfte Sinuswelle mit einer Frequenz von 1MHz. Durch die Dämpfung hat die Welle nach 5 Perioden noch eine Restamplitude von circa 50%. Bei der Wellenform 4 und 5a handelt es sich um einen doppelexponentiellen Puls. Sie unterscheiden sich lediglich in der Dauer. Wellenform 4 hat eine Anstiegszeit von 6,4*µs* und eine Rückenhalbwertszeit von 69*µs*. Bei Wellenform 5a beträgt die Anstiegszeit 40*µ*s und die Rückenhalbwertszeit 120*µ*s. Die Wellenform 5a hat daher den höchsten Energieinhalt.

Bei einem angemessenen Schutz von elektrischen und elektronischen Systemen in Flugzeugen gegen die Wirkungen des elektromagnetischen Blitzimpulses gibt es unterschiedliche Kombinationen bestehend aus folgenden Schutzmaßnahmen: Erdung und Potentialausgleich, räumliche Schirmung, Leitungsführung und Leitungsschirmung. Die Kennwerte der Schutzmaßnahmen müssen dem gewählten Bedrohungs- oder Gefährdungspegel entsprechen.

Elektronische Geräte oder elektrische Geräte, die insbesondere in Flugzeugen verbaut sind, benötigen einen entsprechenden Blitzschutz, um vor Blitzeinschlägen geschützt zu sein. Erfolgt der Einschlag eines Blitzes aufgrund ungünstiger Anordnung direkt in ein außen angebrachtes Gerät (zum Beispiel elektronische Antenne) spricht man von einem "direktem Blitzeinschlag". Dieser Fall soll nicht betrachtet werden. Erfolgt der Einschlag an einer beliebigen Stelle in die Flugzeughülle, kann der Blitzpuls von dort aus kapazitiv auf das Schnittstellenkabel, mit dem die elektronischen Geräte untereinander kommunizieren, einkoppeln. Der Blitzpuls bewegt sich als Welle entlang dem Kabel und dringt über den Gerätestecker in das Gerät ein. Dabei spricht man von einem "indirekten Blitzeinschlag". Die dafür notwendige Schutzmaßnahme nennt man "indirekten Blitzschutz".

Der indirekte Blitzschutz erfolgt üblicherweise mit standardisierten Schutzelementen. Die Bauelemente dafür sind: Gasableiter, Varistoren, Suppressordioden und Widerstände. Die Verwendung erfolgt in Abhängigkeit von der Pulsenergie. Das Grundprinzip besteht darin, die kurzzeitige Pulsenergie aufgrund des indirekten Blitzeinschlages mittels dieser Bauelemente, insbesondere mittels Varistor / Widerstand oder Gasableiter, in Wärme umzuwandeln. Die dafür notwendigen Berechnungen sind in der Fachliteratur beschrieben (vgl. Mel Clarke und Kent Walters (2018): "Lightning protection for aircraft electrical power and data communication systems", Druckschrift Micronote 127, Microsemi Corperation).

Die gegenwärtigen Blitzschutzmaßnahmen in Fluggeräten aller Art haben jedoch die folgenden Nachteile. Zunächst vergrößert sich die erforderliche Fläche für die Schutzelemente linear mit Anzahl der extern verdrahteten Schnittstellenverbindungen, die an das Gerät angeschlossen sind. Darüber hinaus erhöht sich die Bauteilfläche exponentiell mit steigender Höhe des Bedrohungspegels. Dieser exponentielle Anteil wirkt sich signifikant auf das Volumen des Gerätes aus. Wird beispielsweise die Energie mit Hilfe eines Widerstands in Wärme umgewandelt, erhöht sich bei konstantem Widerstand R die Energie E und damit das Volumen des Bauelements gemäß E = R x I² x t. Hierbei ist I der Stoßstrom des Blitzpulses, der auf der Schnittstellenleitung in das Gerät fließt und t die Dauer des Pulses. Fig. 7 zeigt in der Grafik den Zusammenhang von Bauteilfläche zu Bedrohungspegel, sowie den Nachteil der gegenwärtigen Blitzschutzmaßnahme. Zwischen jedem Bedrohungspegel liegt ungefähr ein Faktor 2,5, um den sich der Strom gemäß dem Luftfahrtstandard DO-160, Sect. 22 erhöht. Die Berechnung der Grafik in Fig. 7 erfolgt anhand einer Anzahl üblicher digitaler Schnittstellen im Bereich der Luftfahrt und unter Berücksichtigung existierender Schutzelemente.

Ist der Bedrohungspegel sehr hoch, ist davon auszugehen, dass ein einzelnes Schutzelement nicht ausreicht. Es ist also erforderlich, ein zweites, stärkeres Schutzelement mit anderer Technologie in Reihe vorzuschalten (Staffelschutz).

Dies ist vor allem bei Schnittstellen mit niedriger Impedanz, wie zum Beispiel bei Stromversorgungsanschlüssen, notwendig. Diese zusätzliche Verstärkung des Schutzes führt wiederum zu einem noch größeren Flächenverbrauch durch Bauelemente.

Die US 2019/0199137 A1 beschreibt ein kabelloses Nahfeld-Mikrowellen-Stromübertragungssystem. Das kabellose Leistungsübertragungssystem verwendet ein kabelloses Leistungsübertragungsgerät, um kabellos Strom an ein kabelloses Leistungsempfangsgerät zu übertragen. Das kabellose Leistungsübertragungsgerät weist Mikrowellenantennen auf, welche sich entlang einer Achse in einer staffelförmigen Anordnung erstrecken. In der staffelförmigen Anordnung sind die Mikrowellenantennen auf alternierenden Seiten der Achse angeordnet. Jede Mikrowellenantenne erstreckt sich entlang einer Richtung, die senkrecht zu der Achse ist. Viele Antennen stehen in Überlapp mit einer kabellosen Leistungsempfangsantenne in dem kabellosen Leistungsempfangsgerät. Eine Steuerschaltung verwendet einen Oszillator und eine Verstärkerschaltung, um die Antennen, die mit der kabellosen Leistungsempfangsantenne in Überlapp stehen, mit Treibersignalen zu versorgen. Die Treibersignale können angepasst werden, basierend auf einer Rückkopplung von dem kabellosen Leistungsempfangsgerät, um die Leistungs-übertragungseffizienz zu erhöhen. Das System kann ein kabelloses Leistungsüber-tragungsgerät mit induktiven Leistungsübertragungsspulen aufweisen.

Die US 2018/0041249 A1 beschreibt einen elektrischen Leistungs-/Daten-Koppler. Solch ein Daten- und Leistungsübertragungsnetzwerk umfasst einen Aktuator und zwei Leistungs-/Daten-Koppler. Der Aktuator ist mit dem elektrischen Koppler verbunden, erstens um mit elektrischer Energie über die Stromversorgungspins das Netzwerk über den dritten Pin zu senden, oder um Daten von dem Netzwerk über den vierten Pin zu empfangen. Dieses System umfasst auch einen galvanischen Trennungs-Transformer, eine Windung, welche mit den ersten und zweiten Stromversorgungspins verbunden sind. Des Weiteren findet der Datentransfer über einen ersten und zweiten Transformer statt, welche die Daten des Netzwerks in das System und wiederum Daten an das Netzwerk induktiv übertragen.

Der vorliegenden Erfindung liegt daher die Aufgabe zugrunde, ein elektrisches Gerät mit indirektem Blitzschutz, insbesondere für den Einsatz in einem Kurs-Lage-Referenz-System für Flugnavigation sowie in einem Flugzeug zu schaffen, welches bei hohen Blitzschutzanforderungen eine reduzierte Größe aufweist.

Diese Aufgabe wird durch das elektrische Gerät mit indirektem Blitzschutz nach Anspruch 1, durch das Kurs-Lage-Referenz-System nach Anspruch 12 sowie durch das Flugzeug nach Anspruch 13 gelöst. Vorteilhafte Ausgestaltungen und Weiterbildungen der Erfindung sind in den Unteransprüchen angegeben.

Erfindungsgemäß ist ein elektrisches Gerät mit indirektem Blitzschutz vorgesehen, welches ein elektrisch leitendes Gehäuse aufweist, in welchem elektrische Bauelemente aufgenommen sind. Ferner weist das elektrische Gerät eine elektrische Datenschnittstelle auf, welche mit den elektrischen Bauelementen verbunden ist, um interne elektrische Signale von den Bauelementen aus dem Gehäuse oder externe elektrische Signale in das Gehäuse zu den Bauelementen zu übertragen. Ferner ist eine elektrische Stromversorgungsschnittstelle vorgesehen, welche die elektronischen Bauelemente von einer externen Stromquelle mit elektrischer Leistung versorgt. Hierbei sind die elektrische Datenschnittstelle und die elektrische Stromversorgungsschnittstelle so aufgebaut, dass die elektrischen Bauelemente von dem Gehäuse sowie den Eingangs-/Ausgangsleitungen der Datenschnittstelle und der Stromversorgungsschnittstelle galvanisch getrennt sind, so dass ein Schaden der Bauelemente durch einen blitzverursachten Strompuls verhindert wird. Für einen zweckmäßigen Einsatz des elektrischen Geräts für die Flugnavigation eines Flugzeugs ist es erfindungsgemäß vorgesehen, dass die elektrischen Bauelemente dazu angepasst sind, Kurs-Lage-Referenz-Daten für Flugnavigation bereitzustellen. Für eine zweckmäßige Umsetzung der galvanischen Trennung der elektrischen Bauelemente von dem elektrisch leitenden Gehäuse des elektrischen Geräts sowie den Eingangs-/Ausgangsleitungen der Datenschnittstelle ist es erfindungsgemäß vorgesehen, dass die elektrische Datenschnittstelle einen mit einer peripheren elektrischen Leiterstruktur verbindbaren externen Datenschnittstellenteil und einen mit den Bauelementen verbundenen internen Datenschnittstellenteil aufweist, die galvanisch getrennt sind, wobei die Datenübertragung zwischen externem und internem Datenschnittstellenteil optisch, magnetisch, kapazitiv, oder mechanisch erfolgt.

Die Erfindung betrifft also ein elektrisches Gerät mit indirektem Blitzschutz, das auch bei hohen Blitzschutzanforderungen wie einem Bedrohungspegel von größer als 3 (siehe Fig. 7) nach wie vor eine kompakte Bauweise mit geringem Volumen und reduzierter Größe aufweist. Durch die galvanische Trennung der Bauelemente im Gehäuseinneren des elektrischen Geräts wird erfindungsgemäß ein blitzverursachter Strompuls unterbrochen, wobei ein durch einen Blitzpuls verursachter Strom, der bei Geräten gemäß dem Stand der Technik im Flugzeugkabel zum Gerät, im Gerät über die oben erwähnten Schutzelemente wie Gasableiter, Varistoren, Suppressordioden und Widerstände zum Gehäuse und von dort über den Erdungsanschluss zur Flugzeughülle geflossen ist, erfindungsgemäß nicht mehr intern im Gerät zum Gehäuse fließt. Somit kann auf die Schutzelemente mit hohem Platzbedarf verzichtet werden und gerade bei einer großen Anzahl an verdrahteten Schnittstellen und bei einem hohen Bedrohungspegel signifikant sowohl Volumen als auch Gewicht des elektrischen Geräts gemäß der Erfindung reduziert werden.

Hierbei ist es zweckmäßig, wenn die elektrischen Bauelemente einen Faserkreiselkompass oder MEMS-Kreisel sowie elektrische Schaltkreise zur Ansteuerung des Kompasses sowie zur Auswertung und Übertragung der Kurs- und Lagedaten umfassen.

Für eine einfache Kommunikation gemäß geltendem Datenübertragungsstandard in der Aeronautik ist es von Vorteil, wenn die elektrische Datenschnittstelle dazu angepasst ist, Daten digital, insbesondere im ARINC 429-Protokoll, im RS-422-Protokoll, im RS-485-Protokoll, im CAN-Protokoll, im ETHERNET-Protokoll, oder im DISCRETE-Protokoll zu lesen und auszugeben.

Für eine ausfallsichere und redundante Ausgabe von Kurs- und Lagereferenzdaten ist es dabei besonders von Vorteil, wenn die elektrische Datenschnittstelle dazu angepasst ist, Kurs- und Lagereferenzdaten analog auszugeben.

Aufgrund eines exponentiellen Anstiegs der Bauteilfläche mit dem Bedrohungspegel (Fig. 7) ist es dabei besonders zweckmäßig, wenn die elektrischen Bauelemente mit einem Blitzschutz eines Bedrohungspegels größer oder gleich 3 nach DIN EN 62305 versehen sind.

Für eine besonders einfache Umsetzung der galvanischen Trennung der elektrischen Bauelemente des elektrischen Geräts von der umgebenden Peripherieschaltung und der externen Stromquelle ist es besonders zweckmäßig, wenn die elektrische Stromversorgungsschnittstelle einen mit einer externen Stromquelle verbindbaren externen Stromversorgungsschnittstellenteil und einen mit den Bauelementen verbundenen internen Stromversorgungsschnittstellenteil aufweist, die galvanisch getrennt sind, wobei die elektrische Energieübertragung zwischen externem und internem Stromversorgungsschnittstellenteil durch magnetische Induktion oder durch Übertragung elektromagnetischer Wellen erfolgt.

Für einen besonders effektiven Schutz gegenüber dem blitzverursachten Spannungspuls der elektrischen Bauelemente ist es von Vorteil, wenn die elektrischen Bauelemente durch ESD-Schutzdioden vor einem blitzverursachten Spannungspuls geschützt sind.

Um einen Spannungsüberschlag zwischen den Leitungen des elektrischen Geräts zu verhindern oder zumindest die Wahrscheinlichkeit zu reduzieren, ist es von Vorteil, wenn die elektrische Datenschnittstelle Potenzialausgleichselemente aufweist, die zwischen zweiadrigen Differenzsignal-Eingangs-/Ausgangsleitungen zwischengeschaltet sind, um bei einem blitzverursachten Spannungspuls die Eingangs-/Ausgangsleitungen auf das gleiche elektrische Potenzial anzuheben, um einen Spannungsüberschlag zwischen den Leitungen zu vermeiden.

Hierbei ist es zweckmäßig, wenn die Potentialausgleichselemente Suppressordioden, Varistoren oder Serienwiderstandselemente umfassen.

Gemäß einer weiteren besonders vorteilhaften Ausgestaltung der Erfindung ist es von Vorteil, wenn die Eingangs-/Ausgangsleitungen der elektrischen Datenschnittstelle und der Stromversorgungsschnittstelle so voneinander beabstandet angeordnet sind, dass bei einem blitzverursachten Spannungspuls ein Spannungsüberschlag zwischen den Leitungen vermieden wird.

Hierbei ist es zweckmäßig, wenn ein Mindestabstand zwischen den Eingangs-/Ausgangsleitungen der elektrischen Datenschnittstelle und der Stromversorgungsschnittstelle größer als 2 mm, größer als 2,5 mm, oder größer als 3 mm ist.

Erfindung wird ferner ein Kurs-Lage-Referenz-System für Flugnavigation beansprucht, das ein elektrisches Gerät gemäß der Erfindung aufweist.

Darüber hinaus ist erfindungsgemäß ein Flugzeug vorgesehen, welches das elektrische Gerät mit indirektem Blitzschutz gemäß der Erfindung umfasst.

Die Erfindung wird im Folgenden mit Bezug auf die Figuren in beispielhafter Weise im Detail beschrieben. Der Gegenstand der Erfindung wird durch die Ansprüche definiert. Es zeigen:
- Fig. 1: ein schematisches Blockschaltbild eines elektrischen Geräts mit indirektem Blitzschutz gemäß der Erfindung, welches mit einer peripheren elektrischen Leiterstruktur sowie einer externen Stromquelle in Verbindung steht;
- Fig. 2A bis Fig. 2D: schematische Schaltbilder einer Datenschnittstelle und einer Stromversorgungsschnittstelle des elektrischen Geräts gemäß der Erfindung;
- Fig. 3: ein detailliertes schematisches Blockschaltbild einer Datenschnittstelle des elektrischen Geräts mit indirektem Blitzschutz gemäß der Erfindung;
- Fig. 4: ein Kurs-Lage-Referenz-System für Flugnavigation gemäß der Erfindung;
- Fig. 5: ein Flugzeug mit einem elektrischen Gerät gemäß der Erfindung;
- Fig. 6: eine Tabelle mit charakteristischen Kenndaten von Bedrohungspegeln 1 bis 5 gemäß dem Blitzschutz-Standard DIN EN 62305; und
- Fig. 7: ein schematisches Diagramm, welches die benötigte Bauteilfläche in Abhängigkeit des Bedrohungspegels nach Blitzschutznorm DIN EN 62305 zeigt.

In den Figuren sind gleiche Bauteile und Bauteile mit der gleichen Funktion mit den gleichen Bezugszeichen gekennzeichnet.

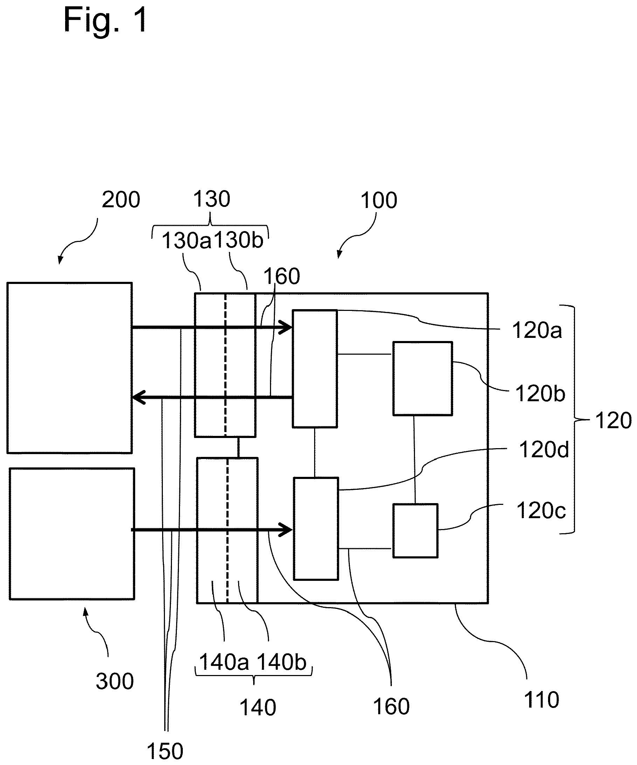

Fig. 1 zeigt ein schematisches Blockschaltbild eines elektrischen Geräts 100 mit indirektem Blitzschutz, welches mit einer peripheren elektrischen Leiterstruktur 200, geeignet zur Datenübertragung, sowie einer externen Stromquelle 300 in Verbindung steht. Das elektrische Gerät 100 mit indirektem Blitzschutz weist ein elektrisch leitendes Gehäuse 110 auf, in welchem elektrische Bauelemente 120 aufgenommen sind. Das elektrisch leitende Gehäuse 110 kann dabei ein metallisches Gehäuse oder ein Gehäuse mit metallischer Beschichtung sein. Das Gehäuse 110 kann auch aus einem isolierenden Material gefertigt sein, wobei mittels eines Drahtgitters eine elektrische Abschirmung der elektrischen Bauelemente 120 wie bei einem Faraday'schen Käfig erreicht wird. Die elektrischen Bauelemente sind untereinander über interne Verbindungsleitungen 160 miteinander verbunden, wobei durch die Verbindungsleitungen 160 Daten übertragen oder eine Stromversorgung sichergestellt werden kann. Die Verbindungsleitungen 160 sind hier lediglich schematisch dargestellt und können von einfachen Stromversorgungsleitungen bis zu Datenübertragungsbussystemen ausgestaltet sein.

Die elektrischen Bauelementen 120 sind über die internen Verbindungsleitungen 160 mit einer elektrischen Datenschnittstelle 130 verbunden, um interne elektrische Signale der Bauelemente 120 aus dem Gehäuse 110 oder externe elektrische Signale von der peripheren elektrischen Leiterstruktur 200 in das Gehäuse 110 zu den Bauelementen 120 zu übertragen. Das elektrische Gerät 100 weist ferner eine elektrische Stromversorgungsschnittstelle 140 auf, welche die elektrischen Bauelemente 120 von einer externen Stromquelle 300 mit elektrischer Leistung versorgt. Die externe Stromquelle 300 kann hierbei von jeglicher Art sein, um eine Versorgung des elektrischen Geräts 100 mit elektrischer Energie sicherzustellen. Bevorzugt ist jedoch eine Stromversorgung mit einer Versorgungsspannung von 28 V Gleichstrom, welche im Bereich der Luftfahrt üblich ist.

Wie schematisch durch die gestrichelten Linien in Fig. 1 bei der elektrischen Datenschnittstelle 130 und der elektrischen Stromversorgungsschnittstelle 140 angedeutet, sind die elektrische Datenschnittstelle 130 und die elektrische Stromversorgungsschnittstelle 140 so aufgebaut, dass die elektrischen Bauelemente 120 von dem Gehäuse 110 sowie den Eingangs-/Ausgangsleitungen 150 der Datenschnittstelle 130 und der Stromversorgungsschnittstelle 140 galvanisch getrennt sind, so dass ein Schaden der Bauelemente 120 durch einen blitzverursachten Strompuls verhindert wird. Bei dem erfindungsgemäßen elektrischen Gerät sind also sämtliche Bauelemente 120 galvanisch getrennt zum Gehäuse 110 aufgebaut, und ebenso die Versorgung dieser Bauelemente 120 ist galvanisch getrennt zum Gehäuse 110.

Auch wenn das erfindungsgemäße elektrische Gerät mit indirektem Blitzschutz in seiner Anwendung nicht auf Luftfahrt beschränkt sein soll, ist es trotzdem bevorzugt, wenn die elektrischen Bauelemente 120 dazu angepasst sind, Kurs-Lage-Referenz-Daten für die Flugnavigation bereitzustellen. Die elektrischen Bauelemente 120 können hierbei unterschiedliche Funktionen übernehmen. So kann beispielsweise eines der elektrischen Bauelemente 120 eine Datenübermittlungseinheit 120a sein, welche mit einem internen Datenschnittstellenteil 130b elektrisch verbunden ist, um interne elektrische Signale der Bauelemente 120 über die elektrische Datenschnittstelle 130 an eine periphere elektrische Leiterstruktur 200 galvanisch getrennt zu senden. Bei einem Einsatz des elektrischen Geräts 100 als Kurs-Lage-Referenz-Bauteil für die Flugnavigation kann ferner eines der elektrischen Bauelemente 120 ein Faserkreiselkompass 120b sein, durch welchen Kurs-Lage-Referenz-Daten bereitgestellt werden. Des Weiteren können elektrische Schaltkreise 120c zur Ansteuerung des Kompasses 120b sowie zur Auswertung und Übertragung der Kurs- und Lagedaten vorgesehen sein. Schließlich kann das elektrische Gerät 100 eine zentrale Prozessoreinheit 120d aufweisen, durch welche der Betrieb des elektrischen Geräts 100, insbesondere die Ansteuerung des Kompasses sowie die Auswertung und Übertragung der Kurs-und Lagedaten überwacht und gesteuert wird. Das elektrische Gerät 100 kann auch als Daten-Verteilvorrichtung, als Daten-Komprimiervorrichtung, oder als Flugkontrollgerät ausgestaltet sein. Ganz allgemein kann das elektrische Gerät 100 ein Gerät sein, welches hohe Blitzschutzanforderungen erfüllen muss und gleichzeitig, beispielsweise aufgrund einer hohen Anzahl von Schnittstellen, besonders gefährdet ist.

Bei einer Ausgestaltung des elektrischen Geräts 100 mit indirektem Blitzschutz als Teil eines Kurs-Lage-Referenz-Systems (AHRS) mit einem faseroptischen Kreisel (FOG) können, wie in der Luftfahrt Standard, die Daten im ARINC 429-Format ausgegeben werden. Somit ist also die elektrische Datenschnittstelle 130 dazu angepasst, Daten digital zu lesen und auszugeben. Kurs- und Lagereferenzdaten können jedoch optional auch über analoge Schnittstellen (beispielsweise Synchro-Schnittstelle) ausgegeben werden. Somit ist die elektrische Datenschnittstelle 130 also auch dazu angepasst, Kurs- und Lagereferenzdaten analog auszugeben. Die hohe Genauigkeit der eingesetzten Sensoren der elektrischen Bauelemente 120 des elektrischen Geräts 100 erlaubt hierbei eine autonome Kursausrichtung (Gyro Compassing). Somit kann auf störanfällige magnetische Sensoren für die Kursausrichtung komplett verzichtet werden.

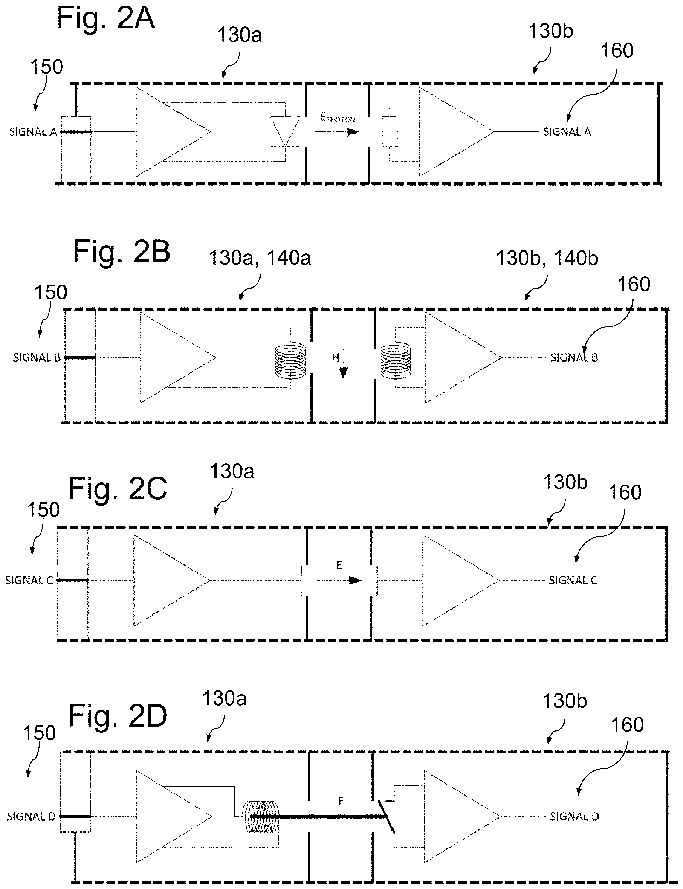

Im Folgenden soll mit Bezug auf Fig. 2A bis 2D die galvanische Trennung der elektrischen Bauelemente 120 von dem Gehäuse 110 sowie den Eingangs-/Ausgangsleitungen 150 der Datenschnittstelle 130 und der Stromversorgungsschnittstelle 140 beschrieben werden. Für die galvanische Trennung weist die elektrische Datenschnittstelle 130 einen über die Eingangs-/Ausgangsleitungen 150 mit der peripheren elektrischen Leiterstruktur 200 verbindbaren externen Datenschnittstellenteil 130a und den mit den elektrischen Bauelementen 120 über die internen Verbindungsleitungen 160 verbundenen internen Datenschnittstellenteil 130b auf. Der externe Datenschnittstellenteil 130a und der interne Datenschnittstellenteil 130b sind dabei galvanisch getrennt, also elektrisch voneinander isoliert, wobei eine Datenübertragung zwischen externem und internem Datenschnittstellenteil 130a, 130b beispielsweise auf die in den Fig. 2A bis Fig. 2D gezeigten Arten vorgesehen sein kann.

So kann gemäß Fig. 2A ein Eingangssignal von der peripheren elektrischen Leiterstruktur 200 auf einer Eingangsleitung 150, welches als Signal A bezeichnet ist, in dem externen Datenschnittstellenteil 130a mittels eines Verstärkers und einer Leuchtdiode in ein optisches Signal (E_{Photon}) gewandelt werden und im internen Datenschnittstellenteil 130b mittels einer Fotodiode und einem Verstärker wieder in ein elektrisches Eingangssignal A, welches dem Signal A auf der Eingangsseite des externen Datenschnittstellenteils 130a entspricht, gewandelt werden. Das elektrische Signal A des internen Datenschnittstellenteils 130b wird dann über die internen Verbindungsleitungen 160 zu den Bauteilen 120 geleitet.

In analoger Weise wie bei Fig. 2A kann eine Datenübertragung bei gleichzeitiger galvanischer Trennung durch die in Fig. 2B gezeigte magnetische Kopplung von zwei Spulen durch ein Magnetfeld H erreicht werden.

Eine weitere Möglichkeit der Datenübertragung ist in Fig. 2C gezeigt, in welchem durch eine kapazitive Kopplung ein Signal C im externen Datenschnittstellenteil 130a durch einen Verstärker in elektrische Ladung auf einer Kondensatorplatte gewandelt (verbunden mit einem elektrischen Feld E) und im internen Datenschnittstellenteil 130b diese entgegengesetzte Ladung auf der gegenüberliegenden Kondensatorplatte mittels eines Verstärkers wieder in das Signal C rückverwandelt wird.

Für nicht zeitbeschränkte Signale ist es theoretisch auch denkbar, dass wie in Fig. 2D gezeigt, ein Schaltsignal D im externen Datenschnittstellenteil 130a mittels eines Verstärkers einem mechanischen Schaltrelais zugeführt wird, wodurch durch eine Kraftübermittlung durch die Kraft F ein mechanischer Schalter im internen Datenschnittstellenteil 130b betätigt wird, wodurch das Schaltsignal D galvanisch getrennt von einer peripheren elektrischen Leiterstruktur 200 an die Bauelemente 120 übertragen werden kann.

Somit kann die Datenübertragung zwischen externem Datenschnittstellenteil 130a und internem Datenschnittstellenteil 130b also optisch (Fig. 2A), magnetisch (Fig. 2B), kapazitiv (Fig. 2C), mechanisch (Fig. 2D) oder ganz allgemein durch Übertragung elektromagnetischer Wellen erfolgen (beispielsweise auch im nicht optischen Funkbereich, wobei hier mit entsprechend ausgelegten Sende-/Empfangsantennen gearbeitet wird). Die Trennung der Signale zur restlichen Elektronik erfolgt also hauptsächlich durch optische, magnetische, elektrische oder mechanische Übertragungstechniken, wie in den Fig. 2A bis 2D gezeigt wird. Obwohl die Fig. 2A bis 2D zunächst nur hinsichtlich Signaleingängen beschrieben wurden, ist es klar, dass bei einer Übertragung von Signalen von einer internen Datenschnittstelle 130b zu einer externen Datenschnittstelle 130a die gleiche Technik, wie in den Fig. 2A bis 2D gezeigt, in umgekehrter Richtung angewendet wird.

Eine konsequente galvanische Trennung erfordert auch, eine Stromversorgung der Schnittstellenbauelemente galvanisch getrennt aufzubauen. Aufgrund des geringen Stromverbrauchs für die Treiber- und Empfängerbauelemente 120 fällt der hierfür notwendige Platzbedarf gering aus. In der Luftfahrt erfolgt eine Stromversorgung mit Gleichstrom und einer Versorgungsspannung von 28 V, wobei die Eingangsspannung von 28 V über einen Gleichstromwandler läuft. Hier liegt also bereits eine galvanische Trennung vor, da ein Gleichstromwandler ähnlich wie ein Wechselstromtransformator über induktive Kopplung arbeitet.

Gemäß der Erfindung ist also ein elektrisches Gerät 100 mit indirektem Blitzschutz realisiert, bei dem alle verdrahteten Schnittstellen- und Stromversorgungsverbindungen von und zu dem Gerät galvanisch isoliert aufgebaut sind. Hierfür weist also auch die elektrische Stromversorgungsschnittstelle 140 einen mit der externen Stromquelle 300 verbindbaren externen Stromversorgungsschnittstellenteil 140a und einen mit den Bauelementen verbundenen internen Stromversorgungsschnittstellenteil 140b auf, die ebenfalls galvanisch getrennt sind, wobei die elektrische Energieübertragung zwischen externem und internem Stromversorgungsschnittstellenteil 140a, 140b durch magnetische Induktion (Fig. 2B) oder durch Übertragung elektromagnetischer Wellen erfolgt.

Durch die galvanische Trennung des elektrischen Geräts von seiner Umgebung kann also ein Schaden der Bauelemente 120 durch einen blitzverursachten Strompuls verhindert werden. Neben einem Schutz vor einem Schaden durch einen blitzverursachten Strompuls ist darüber hinaus auch ein Blitzschutz durch einen blitzverursachten Spannungspuls notwendig.

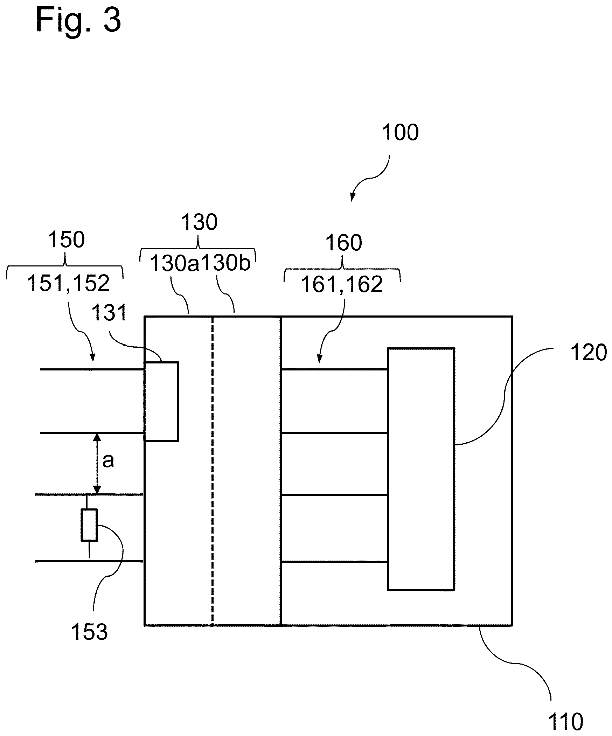

Blitzschutzmaßnahmen gegen Schaden durch einen blitzverursachten Spannungspuls sind schematisch im Blockschaltbild der Fig. 3 illustriert. So werden die Blitzschutzmaßnahmen am Beispiel der Datenschnittstelle 130 beschrieben, sind jedoch auch bei der Stromversorgungsschnittstelle 140 des elektrischen Geräts 100 anwendbar. Wie in Fig. 3 gezeigt, kann beispielsweise ein Schutz vor einem blitzverursachenden Spannungspuls dadurch umgesetzt werden, dass im Bereich der elektrischen Datenschnittstelle 130a zwischen zweiadrig differentiellen Signalen auf Eingangsleitungen zumindest ein sogenannter ESD (Electrostatic Discharge) Schutz 131 vorhanden ist. Besonders aktive Bauelemente wie Treiber, Empfänger und Controller müssen in der Regel vor einem hohen Spannungspuls geschützt werden. Aufgrund des niedrigen Stroms ist hierbei ein ESD-Schutz ausreichend. Dieser ist in manchen Treibern und Empfängern bereits durch vorhandene ESD-Schutzdioden im Bauelement integriert, so dass kein zusätzlicher Aufwand notwendig ist. Eine ESD-Schutzdiode kann beispielsweise durch eine in Sperrrichtung geschaltete Tunneldiode verwirklicht sein.

Bei zweiadrigen differentiellen Signalen auf Ausgangsleitungen 150 mit den Leitungen 151, 152 können darüber hinaus Potenzialausgleichselemente 153 eingesetzt werden, damit bei einem Blitzpuls alle elektrischen Eingänge/Ausgänge auf das gleiche Potential angehoben werden und es somit zu keinem Spannungsüberschlag kommt. Dies ist erforderlich, da gerade bei hohen Spannungspulsen der Abstand zwischen den Pins der Bauelemente 120 herstellerbedingt, um Platz zu sparen, gering ist. Somit kann also die elektrische Datenschnittstelle 130 Potentialausgleichselemente 153 aufweisen, die zwischen zweiadrige Differenzsignal-Eingangs-/Ausgangsleitungen 151, 152 zwischengeschaltet sind, um bei einem blitzverursachten Spannungspuls die Eingangs-/Ausgangsleitungen 150 auf das gleiche elektrische Potential anzuheben, um einen Spannungsüberschlag zwischen den Leitungen zu vermeiden. Da die internen Verbindungsleitungen 160 hinter der Isolierung der elektrischen Datenschnittstelle 130 und innerhalb der Abschirmung sitzen, müssen keine Potentialausgleichselemente zwischen den zweiadrigen Verbindungsleitungen 161, 162 vorgesehen werden. Als Potentialausgleichselement 153 genügt hierbei eine Suppressordiode, die von der Größenordnung individuell an die Art der Schnittstelle und den Bedrohungspegel angepasst ist. Serienwiderstände in den Signalleitungen 150 erfüllen ebenfalls den Zweck.

Damit es zu keinem Spannungsüberschlag zwischen unterschiedlichen Schnittstellenleitungen kommen kann, können darüber hinaus alle Leiterbahnen der Eingangs-/Ausgangsleitungen 150 zueinander einen ausreichenden Abstand a aufweisen. Hierbei kann ferner auch bei einem mit dem externen Datenschnittstellenteil 130a verbundener Gerätestecker (sowohl männlicher wie weiblicher Teil) mit ausreichendem Pinabstand a eingesetzt werden.

Somit sind also zweckmäßigerweise die Eingangs-/Ausgangsleitungen 150 der elektrischen Datenschnittstelle 130 und der Stromversorgungsschnittstelle 140 so voneinander beabstandet angeordnet, dass bei einem blitzverursachten Spannungspuls ein Spannungsüberschlag zwischen den Leitungen 150 vermieden wird. Dabei kann ein Mindestabstand a zwischen den Eingangs-/Ausgangsleitungen 150 der elektrischen Datenschnittstelle 130 und der Stromversorgungsschnittstelle 140 größer als 2 mm, größer als 2,5 mm, größer als 3 mm, größer als 3,5 mm, größer als 4 mm, größer als 4,5 mm oder größer als 5 mm sein. Für den Fall, dass man bei der Fronteinheit des externen Datenschnittstellenteils 130a einen Pinabstand a nicht vergrößern will, kann auch eine lokale Beschichtung der Leiterplatte eingesetzt werden.

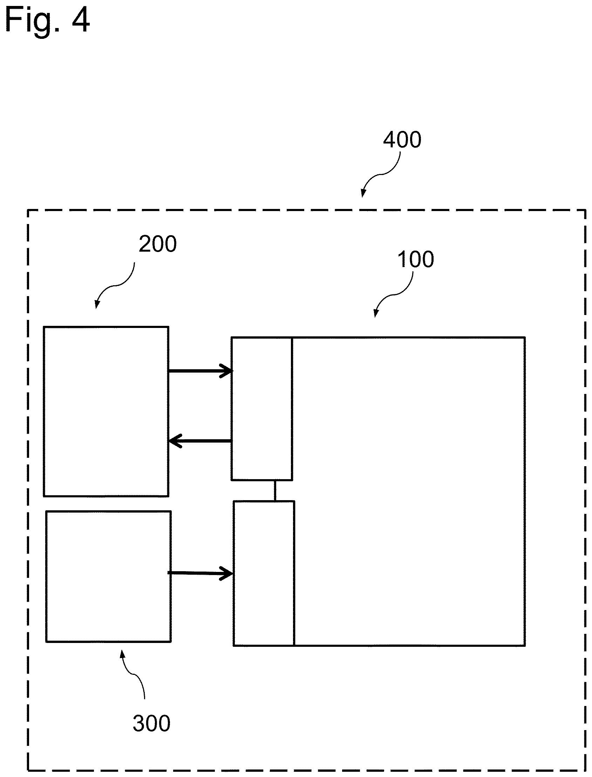

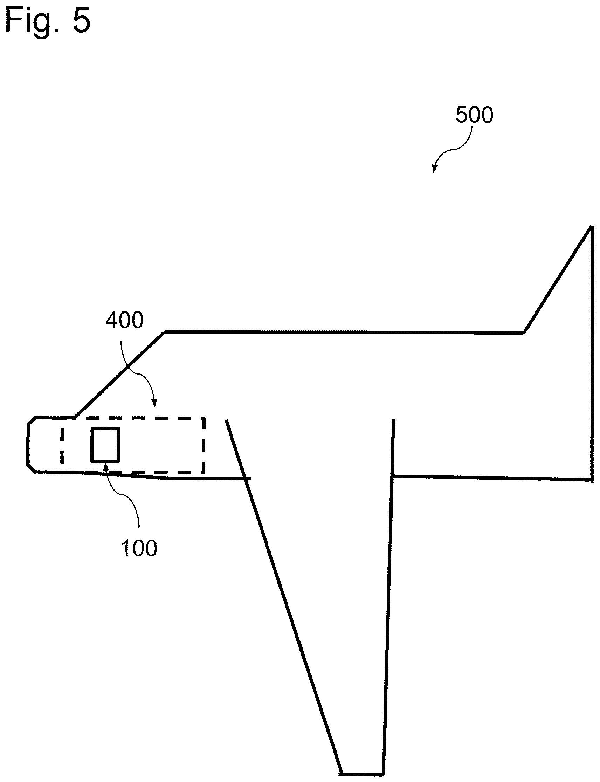

Fig. 4 zeigt ein schematisches Blockschaltbild eines Kurs-Lage-Referenz-Systems 400 für Flugnavigation, welches das elektrische Gerät 100, die periphere elektrische Leiterstruktur 200 zur weiteren Datenübermittlung sowie eine externe Stromquelle 300 umfasst. Unter einem Kurs-Lage-Referenz-System (AHRS) 400 soll ein System verstanden werden, welches vorzugsweise in einem Flugzeug 500 verbaut ist, welches in Fig. 5 schematisch gezeigt ist. Das System 400 soll dabei alle beteiligten elektronischen Geräte umfassen, welche zur Flugnavigation des Flugzeugs 500 beteiligt sind. Unter den Begriff Flugzeug 500 soll allgemein ein Fluggerät verstanden werden, welches auch Hubschrauber und Luftschiffe umfasst. So kann ein Flugzeug 500, welches in besonders zweckmäßiger Weise das elektrische Gerät und/oder das Kurs-Lage-Referenz-System 400 gemäß der Erfindung einsetzt, ein Turboprop-Flugzeug, ein Businessjet, ein IFR-Hubschrauber, ein Regional-Flugzeug oder auch militärische COTS-Anwendungen sein.

Erfindungsgemäß wird also ein elektrisches Gerät 100 mit indirektem Blitzschutz vorgesehen, welches auch bei hohen Bedrohungspegeln eine kompakte Bauweise mit reduziertem Volumen aufweist, da übliche Schutzelemente wie Gasableiter, Varistoren, Suppressordioden oder Widerstände aufgrund der galvanischen Trennung der Bauelemente 120 von einer externen Stromquelle 300 und einer peripheren elektrischen Leiterstruktur 200 nicht verwendet werden müssen. Die Erhöhung des Flächenbedarfs aufgrund ansteigenden Isolierbedarfs, sowie der in Fig. 3 gezeigten, bei differentiellen Datenleitungen erforderlichen, einfachen Schutzelemente 131 und 153, ist in Fig. 7 im geringen Anstieg der gestrichelten Linie ersichtlich.

Hierbei zeigt die durchgezogene exponentiell verlaufende Linie eine Bauteilfläche mit üblichen Bauteilen im Stand der Technik, wohingegen die gestrichelte Linie eine Bauteilfläche des erfindungsgemäßen elektrischen Geräts 100 mit indirektem Blitzschutz zeigt. Dabei ist der zu vernachlässigende, zusätzliche Platzbedarf für die galvanische Trennung der Stromversorgung nicht eingerechnet. Bei Betrachtung der Fig. 7 ist, ab dem Bedrohungspegel 3, die signifikante Einsparung am Platz auf der Leiterplatte am auffälligsten. Daher ist es bevorzugt, wenn die elektrischen Bauelemente 120 mit einem Blitzschutz eines Bedrohungspegels größer oder gleich 3 nach DIN EN 62305 versehen sind. Die fehlenden oben genannten Schutzelemente und das damit einhergehend kleinere Gehäusevolumen des Gehäuses 110 führen zu einer Reduzierung an Gewicht. Dies ist gerade in der Luftfahrt von höchster Priorität. Die Kalkulation der Kosten erfolgt durch einen Vergleich zwischen eingesparten Schutzelementen und den galvanischen Isolierelementen mit ihren zugehörigen Treibern. Sie bewegen sich auf ähnlichem Niveau. Damit kann die erfindungsgemäße Lösung kostenneutral umgesetzt werden.

Die Erfindung bietet die Möglichkeit, auf die allgemein als kritisch eingestuften Schutzelemente zu verzichten. Unter normalen Betriebsbedingungen sind sie ohne Funktion, was dazu führt, dass ein Fehler eines Schutzelements unter Umständen erst beim nächsten Serviceintervall eines Flugzeugs bemerkt wird. Fällt ein Schutzelement aus, kann der Blitzpuls über diese Leitung in die Elektronik eines Gerätes des Standes der Technik eindringen und damit zu einem Totalausfall dieses Gerätes führen. Das wiederum kann die Sicherheit des Fluges gefährden. Ohne diese Schutzelemente besteht dieses Risiko nicht mehr. Bei Umsetzung der erfindungsgemäßen Lösung führt der Ausfall eines Bauelements dazu, dass auf dieser Schnittstellenleitung keine Daten mehr übertragen werden können. Dieser Ausfall würde dann dem Piloten über eine andere Signalleitung gemeldet und gibt ihm die Möglichkeit, eine sicherheitsrelevante Entscheidung zu treffen.

Erfindungsgemäß ist also ein elektrisches Gerät 100 mit indirektem Blitzschutz vorgesehen, bei welchem ein elektrisches Gerät mit galvanisch getrennten Potentialen vorgesehen ist. Die erfindungsgemäße galvanische Trennung bei einer Datenschnittstelle kann durch verschiedenste Übertragungsarten wie optisch, magnetisch, kapazitiv, elektrisch, mechanisch oder elektromagnetisch mittels Funkwellen erfolgen. Die galvanische Trennung kann hierbei bei analogen, digitalen und Stromversorgungsleitungseingängen einzeln oder in Kombination erfolgen. Eine weitere Möglichkeit besteht darin, die galvanische Trennung bei Einzelleitern (seriellen Bussystemen), differentiellen Leitern oder parallelen Busleitungen durchzuführen. Eine Übertragung der Signale im galvanisch getrennten Bereich der externen und internen Datenschnittstellenteil 130a, 130b sowie externen und internen Stromversorgungsschnittstellenteil 140a, 140b kann über Medien wie Luft, Gas, Elektrolyte, Glasfaser oder Kunststofffaser erfolgen.

## Patentansprüche

1. Elektrisches Gerät (100) mit indirektem Blitzschutz, mit
- einem elektrisch leitenden Gehäuse (110), in welchem elektrische Bauelemente (120) aufgenommen sind, wobei die elektrischen Bauelemente (120) dazu angepasst sind, Kurs-Lage-Referenz-Daten für Flugnavigation bereitzustellen,
- einer elektrischen Datenschnittstelle (130), welche mit den elektrischen Bauelementen (120) verbunden ist, um interne elektrische Signale von den Bauelementen (120) aus dem Gehäuse (110) oder externe elektrische Signale in das Gehäuse (110) zu den Bauelementen (120) zu übertragen,
- einer elektrischen Stromversorgungsschnittstelle (140), welche die elektrischen Bauelemente (120) von einer externen Stromquelle (300) mit elektrischer Leistung versorgt,
wobei die elektrische Datenschnittstelle (130) und die elektrische Stromversorgungsschnittstelle (140) so aufgebaut sind, dass die elektrischen Bauelemente (120) von dem Gehäuse (110) sowie den Eingangs-/Ausgangsleitungen (150) der Datenschnittstelle (130) und der Stromversorgungsschnittstelle (140) galvanisch getrennt sind, so dass ein Schaden der Bauelemente (120) durch einen blitzverursachten Strompuls verhindert wird, und
wobei die elektrische Datenschnittstelle (130) einen mit einer peripheren elektrischen Leiterstruktur (200) verbindbaren externen Datenschnittstellenteil (130a) und einen mit den Bauelementen (120) verbundenen internen Datenschnittstellenteil (130b) aufweist, die galvanisch getrennt sind, wobei die Datenübertragung zwischen externem und internem Datenschnittstellenteil (130a, 130b) optisch erfolgt, und wobei die elektrische Datenschnittstelle (130) Potenzialausgleichselemente (153) aufweist, die zwischen zweiadrige Differenzsignal-Eingangs-/Ausgangsleitungen (151, 152) zwischengeschaltet sind, um bei einem blitzverursachten Spannungspuls die Eingangs-/Ausgangsleitungen (151, 152) auf das gleiche elektrische Potenzial anzuheben, um einen Spannungsüberschlag zwischen den Leitungen zu vermeiden.

2. Elektrisches Gerät (100) nach Anspruch 1, **dadurch gekennzeichnet, dass** die elektrischen Bauelemente (120) einen Faserkreiselkompass oder MEMS-Kreisel (120b) sowie elektrische Schaltkreise (120c) zur Ansteuerung des Kompasses (120b) sowie zur Auswertung und Übertragung der Kurs- und Lagedaten umfassen.

3. Elektrisches Gerät (100) nach einem der vorstehenden Ansprüche, **dadurch gekennzeichnet, dass** die elektrische Datenschnittstelle (130) dazu angepasst ist, Daten digital, insbesondere im ARINC 429-Protokoll, im RS-422-Protokoll, im RS-485-Protokoll, im CAN-Protokoll, im ETHERNET-Protokoll, oder im DISCRETE-Protokoll, zu lesen und auszugeben.

4. Elektrisches Gerät (100) nach einem der vorstehenden Ansprüche, **dadurch gekennzeichnet, dass** die elektrische Datenschnittstelle (130) dazu angepasst ist, Kurs- und Lagereferenzdaten analog auszugeben.

5. Elektrisches Gerät (100) nach einem der vorstehenden Ansprüche, **dadurch gekennzeichnet, dass** die elektrischen Bauelemente (120) mit einem Blitzschutz eines Bedrohungspegels größer oder gleich 3 nach DIN EN 62305 versehen sind.

6. Elektrisches Gerät (100) nach einem der vorstehenden Ansprüche, **dadurch gekennzeichnet, dass** die elektrische Stromversorgungsschnittstelle (140) einen mit einer externen Stromquelle (300) verbindbaren externen Stromversorgungsschnittstellenteil (140a) und einen mit den Bauelementen (120) verbundenen internen Stromversorgungsschnittstellenteil (140) aufweist, die galvanisch getrennt sind, wobei die elektrische Energieübertragung zwischen externem und internem Stromversorgungsschnittstellenteil (140a, 140b) durch magnetische Induktion oder durch Übertragung elektromagnetischer Wellen erfolgt.

7. Elektrisches Gerät (100) nach einem der vorstehenden Ansprüche, **dadurch gekennzeichnet, dass** die elektrischen Bauelemente (130) durch ESD-Schutzdioden (131) vor einem blitzverursachten Spannungspuls geschützt sind.

8. Elektrisches Gerät (100) nach einem der vorstehenden Ansprüche, **dadurch gekennzeichnet, dass** die Potenzialausgleichselemente (153) Suppressordioden, Varistoren oder Serienwiderstandselemente umfassen.

9. Elektrisches Gerät (100) nach einem der vorstehenden Ansprüche, **dadurch gekennzeichnet, dass** die Eingangs-/Ausgangsleitungen (150) der elektrischen Datenschnittstelle (130) und der Stromversorgungsschnittstelle (140) so voneinander beabstandet angeordnet sind, dass bei einem blitzverursachten Spannungspuls ein Spannungsüberschlag zwischen den Leitungen (151, 152) vermieden wird.

10. Elektrisches Gerät (100) nach einem der vorstehenden Ansprüche, **dadurch gekennzeichnet, dass** ein Mindestabstand (a) zwischen den Eingangs-/Ausgangsleitungen (150) der elektrischen Datenschnittstelle (130) und der Stromversorgungsschnittstelle (140) größer als 2 mm, größer als 2,5 mm, oder größer als 3 mm ist.

11. Kurs-Lage-Referenz-System (400) für Flugnavigation, mit einem elektrischen Gerät nach einem der vorstehenden Ansprüche.

12. Flugzeug (500), mit einem elektrischen Gerät nach einem der Ansprüche 1 bis 10.

## Claims

1. An electrical device (100) with indirect lightning protection, comprising:
- an electrically conductive housing (110), within which electrical components (120) are accommodated, wherein the electrical components (120) are adapted to provide attitude and heading reference data for air navigation,
- an electrical data interface (130), which is connected to the electrical components (120) in order to transmit internal electrical signals from the components (120) out of the housing (110), or to transmit external electrical signals into the housing (110) to the components (120),
- an electrical power supply interface (140), which supplies electrical power to the electrical components (120) from an external power source (300),
wherein the electrical data interface (130) and the electrical power supply interface (140) are configured in such a manner that the electrical components (120) are galvanically isolated from the housing (110) and from the input/output lines (150) of the data interface (130) and the power supply interface (140), so that damage to the components (120) by a lightning-induced current pulse is prevented, and
wherein the electrical data interface (130) has an external data interface part (130a) that is connectable to a peripheral electrical conductor structure (200) and an internal data interface part (130b) that is connected to the components (120), which are galvanically isolated, wherein data transmission between the external and the internal data interface parts (130a, 130b) is done optically, and wherein the electrical data interface (130) includes potential equalization elements (153) which are interconnected between two-core differential signal input/output lines (151, 152) in order to raise the input/output lines (151, 152) to the same electrical potential in the event of a lightning-induced voltage pulse to prevent a voltage flashover between the lines.

2. The electrical device (100) according to claim 1, **characterized in that** the electrical components (120) comprise a fiber gyrocompass or a MEMS gyro (120b) and electrical circuits (120c) for controlling the compass (120b), as well as for evaluating and transmitting the attitude and heading data.

3. The electrical device (100) according to any one of the preceding claims, **characterized in that** the electrical data interface (130) is adapted to read and output data digitally, in particular, in the ARINC 429 protocol, in the RS-422 protocol, in the RS-485 protocol, in the CAN protocol, in the ETHERNET protocol, or in the DISCRETE protocol.

4. The electrical device (100) according to any one of the preceding claims, **characterized in that** the electrical data interface (130) is adapted to output attitude and heading reference data analogously.

5. The electrical device (100) according to any one of the preceding claims, **characterized in that** the electrical components (120) are provided with lightning protection of a threat level greater than or equal to 3 in accordance with DIN EN 62305.

6. The electrical device (100) according to any one of the preceding claims, **characterized in that** the electrical power supply interface (140) has an external power supply interface part (140a) that is connectable to an external power source (300) and an internal power supply interface part (140) that is connected to the components (120), which are galvanically isolated, wherein electrical power transmission between the external and the internal power supply interface parts (140a, 140b) is done by magnetic induction or by transmission of electromagnetic waves.

7. The electrical device (100) according to any one of the preceding claims, **characterized in that** the electrical components (130) are protected from a lightning-induced voltage pulse by ESD protection diodes (131).

8. The electrical device (100) according to any one of the preceding claims, **characterized in that** the potential equalization elements (153) comprise suppressor diodes, varistors, or series resistor elements.

9. The electrical device (100) according to any one of the preceding claims, **characterized in that** the input/output lines (150) of the electrical data interface (130) and the power supply interface (140) are arranged spaced apart from one another in such a manner that a voltage flashover between the lines (151, 152) is prevented in the event of a lightning-induced voltage pulse.

10. The electrical device (100) according to any one of the preceding claims, **characterized in that** a minimum distance (a) between the input/output lines (150) of the electrical data interface (130) and the power supply interface (140) is greater than 2 mm, greater than 2.5mm, or greater than 3mm.

11. An attitude and heading reference system (400) for air navigation, comprising an electrical device according to any one of the preceding claims.

12. An aircraft (500) comprising an electrical device according to any one of claims 1 to 10.

## Revendications

1. Appareil électrique (100) avec protection indirecte contre la foudre, avec
- un boîtier électriquement conducteur (110) dans lequel sont logés des composants électriques (120), les composants électriques (120) étant adaptés pour fournir des données de référence de trajectoire et de position pour la navigation aérienne,
- une interface de données électrique (130) qui est reliée aux composants électriques (120) pour transmettre des signaux électriques internes des composants (120) à partir du boîtier (110) ou des signaux électriques externes dans le boîtier (110) aux composants (120),
- une interface d'alimentation électrique (140) qui alimente en puissance électrique les composants électriques (120) à partir d'une source d'alimentation électrique externe (300),
dans lequel l'interface de données électrique (130) et l'interface d'alimentation électrique (140) sont conçues de manière à ce que les composants électriques (120) soient séparés galvaniquement du boîtier (110) ainsi que des lignes d'entrée/sortie (150) de l'interface de données (130) et de l'interface d'alimentation électrique (140) de sorte qu'une détérioration des composants (120) par une impulsion de courant provoquée par la foudre soit empêchée, et
dans lequel l'interface de données électrique (130) présente une partie d'interface de données externe (130a) connectable à une structure de conducteur électrique périphérique (200) et une partie d'interface de données interne (130b) connectée aux composants (120), qui sont séparées galvaniquement, la transmission de données entre les parties d'interface de données externe et interne (130a, 130b) s'effectuant optiquement et l'interface de données électrique (130) présentant des éléments d'équipotentialité (153) qui sont intercalés entre des lignes d'entrée/sortie de signal différentiel bifilaires (151, 152) pour élever les lignes d'entrée/sortie (151, 152) jusqu'au même potentiel électrique en cas d'impulsion de tension provoquée par la foudre afin d'éviter un claquage de tension entre les lignes.

2. Appareil électrique (100) selon la revendication 1, **caractérisé en ce que** les composants électriques (120) comprennent une boussole à fibres ou un gyroscope MEMS (120b) ainsi que des circuits électriques (120c) pour la commande de la boussole (120b) ainsi que pour l'évaluation et la transmission des données de trajectoire et de position.

3. Appareil électrique (100) selon l'une des revendications précédentes, **caractérisé en ce que** l'interface électrique de données (130) est adaptée pour lire et sortir des données numériquement, notamment dans le protocole ARINC 429, dans le protocole RS-422, dans le protocole RS-485, dans le protocole CAN, dans le protocole ETHERNET, ou dans le protocole DISCRETE.

4. Appareil électrique (100) selon l'une des revendications précédentes, **caractérisé en ce que** l'interface de données électrique (130) est adaptée pour émettre des données de référence de trajectoire et de position de manière analogique.

5. Appareil électrique (100) selon l'une des revendications précédentes, **caractérisé en ce que** les composants électriques (120) sont pourvus d'une protection contre la foudre d'un niveau de menace supérieur ou égal à 3 selon la norme DIN EN 62305.

6. Appareil électrique (100) selon l'une des revendications précédentes, **caractérisé en ce que** l'interface d'alimentation électrique (140) présente une partie d'interface d'alimentation électrique externe (140a) connectable à une source d'alimentation externe (300) et une partie d'interface d'alimentation électrique interne (140) connectée aux composants (120) qui sont séparées galvaniquement, la transmission d'énergie électrique entre la partie d'interface d'alimentation électrique externe et la partie d'interface d'alimentation électrique interne (140a, 140b) étant effectuée par induction magnétique ou par transmission d'ondes électromagnétiques.

7. Appareil électrique (100) selon l'une des revendications précédentes, **caractérisé en ce que** les composants électriques (130) sont protégés contre une impulsion de tension provoquée par la foudre par des diodes de protection ESD (131).

8. Appareil électrique (100) selon l'une des revendications précédentes, **caractérisé en ce que** les éléments d'équipotentialité (153) comprennent des diodes de suppression, des varistances ou des éléments de résistance série.

9. Appareil électrique (100) selon l'une des revendications précédentes, **caractérisé en ce que** les lignes d'entrée/sortie (150) de l'interface de données électrique (130) et de l'interface d'alimentation électrique (140) sont disposées espacées l'une de l'autre de manière à éviter un claquage de tension entre les lignes (151, 152) en cas d'impulsion de tension provoquée par la foudre.

10. Appareil électrique (100) selon l'une des revendications précédentes, **caractérisé en ce qu'**une distance minimale (a) entre les lignes d'entrée/sortie (150) de l'interface de données électriques (130) et de l'interface d'alimentation électrique (140) est supérieure à 2 mm, supérieure à 2,5 mm ou supérieure à 3 mm.

11. Système de référence de trajectoire et de position (400) pour la navigation aérienne, avec un appareil électrique selon l'une des revendications précédentes.

12. Avion (500) avec un appareil électrique selon l'une des revendications 1 à 10.
